# EUROPÄISCHE PATENTSCHRIFT

(11) **EP 2 169 264 B1**
(45) Veröffentlichungstag und Bekanntmachung des Hinweises auf die Patenterteilung: **29.08.2012**
(21) Anmeldenummer: 08017106.9
(22) Anmeldetag: 29.09.2008
(51) Int. Cl.: F16H 1/46

(54) **Planetengetriebe**
Planetary gear unit
Train épicycloïdal

(43) Veröffentlichungstag der Anmeldung: 31.03.2010
(73) Patentinhaber: Siemens Aktiengesellschaft, 80333 München (DE)
(72) Erfinder: Ambrosi, Marco, 47441 Moers (DE)

(56) Entgegenhaltungen:
- WO-A-00/29286
- DE-A1- 2 423 905
- DE-A1- 2 841 331
- DE-A1-102005 029 858
- FR-A- 649 236
- FR-A- 660 902
- US-A- 1 945 361
- US-A- 4 979 700

## Beschreibung

Planetengetriebe bieten gegenüber herkömmlichen Stirnrad- und Kegelstirnradgetrieben hinsichtlich Leistungsdichte und spezifischem Drehmoment deutliche Vorteile und umfassen ein Sonnenrad, einen Planetenradträger mit Planetenrädern sowie ein innenverzahntes Hohlrad. Bedingt durch eine zylindrische Grundform der Hohlräder weisen Planetengetriebe für industrielle Anwendungen häufig eine zylindrische Bauform auf. Planetengetriebe können als Aufsteckgetriebe mit einer Drehmomentstütze, als Anschraub- bzw. Anflanschgetriebe oder in Fußaufstellung mit zusätzlichem Gestell montiert werden.

Verzahnungstaugliche Gußwerkstoffe, wie ADI-900, ermöglichen Konstruktionen, bei denen Gehäuseteile und innenverzahnte Hohlräder in einer Integralbauweise zusammengefaßt sind. Nachteilig hierbei ist, daß hochwertiger Verzahnungswerkstoff in unwirtschaftlicher Weise auch für Gehäuseelemente verwendet wird, die weniger hochwertige Werkstoffe erfordern.

Aus DE 10 2005 029 858 A1 ist eine Getriebekombination bekannt, die eine Planetenstufe und eine Stirnradstufe umfaßt und ein blockförmiges Gehäuse aufweist. Das Gehäuse ist stirnseitig durch einen Deckel verschlossen. Außerdem ist in US 2008 045374 A1 ein Getriebegehäuse mit quaderförmiger Grundstruktur beschrieben. Aus DE 102 51 499 A1 ist eine Getriebekombination mit einem modularen Aufbau für kaskadierbare Planetenstufen und komplementären Flanschzonen an Getriebegehäuseabschnitten beschrieben.

In US 1,945,361, welches als nächster Stand der Technik angesehen wird, ist ein Planetengetriebe mit einer Antriebsund einer Abtriebswelle, die in einem Getriebegehäuse gelagert sind, sowie einer ersten und zweiten Planetenstufe beschrieben. Das Planetengetriebe weist einen einstückigen Getriebegehäusemantel auf, der die erste und zweite Planetenstufe umgibt und stirnseitig jeweils durch einen Gehäusedeckel verschlossen ist. Im Innenraum des Getriebegehäuses ist ein Abstandselement angeordnet, das eine Trennwand bildet und durch das der Innenraum in zwei Teilräume unterteilt ist. Dabei nimmt jeder Teilraum jeweils eine Planetenstufe auf. Die Planetenstufen sind miteinander durch eine Welle verbunden, die durch eine Öffnung im Abstandselement geführt ist. Hohlräder der Planetenstufen sind zwischen den Gehäusedeckeln sowie dem Abstandselement eingeklemmt und damit nur reibschlüssig mit dem Getriebegehäuse verbunden. Für höhere Leistungsklassen ist das aus US 1,945,361 bekannte Planetengetriebe daher ungeeignet.

Der vorliegenden Erfindung liegt die Rufgabe zugrunde, ein kostengünstig herstellbares und einfach aufzustellendes mehrstufiges Planetengetriebe anzugeben.

Diese Aufgabe wird erfindungsgemäß durch ein Planetengetriebe mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Planetengetriebe weist eine Antriebsund eine Abtriebswelle, die in einem Getriebegehäuse gelagert sind, und zumindest eine erste und zweite Planetenstufe auf. Außerdem ist ein einstückiger Getriebegehäusemantel vorgesehen, der die erste und zweite Planetenstufe umgibt und stirnseitig jeweils durch einen Gehäusedeckel verschlossen ist, Im Innenraum des Getriebegehäuses ist zumindest eine Trennwand angeordnet, durch die der Innenraum in zumindest zwei Teilräume unterteilt ist. Jeder Teilraum nimmt jeweils eine Planetenstufe auf. Die Planetenstufen sind durch eine Welle miteinander verbunden, die durch eine Öffnung in der Trennwand geführt ist. Hohlräder der Planetenstufen sind stirnseitig an der Trennwand befestigt. Hierdurch kann für die Hohlräder ein anderer Werkstoff als für den Getriebegehäusemantel oder die Trennwand ausgewählt werden, so daß hochwertiger Werkstoff nicht für Komponenten verwendet werden muß, deren Funktion dies nicht erfordert.

Entsprechend einer bevorzugten Ausgestaltung der vorliegenden Erfindung umspannt das Getriebegehäuse einen quaderförmigen Raum, wobei an Ecken des Getriebegehäuses Befestigungspunkte für Befestigungsmittel vorgesehen sind. Auf diese Weise wird ein mehrstufiges Planetengetriebe in ein blockartiges Gehäuse integriert, wodurch ein Aufstellen des Planetengetriebes ohne zusätzliche Anbau- oder Stützelemente ermöglicht wird. Vorteilhafterweise sind an stirnseitigen Enden des Getriebegehäusemantels umlaufende Anschraubleisten vorgesehen. Dies erleichtert eine Befestigung des Planetengetriebes auf einer Aufstellfläche deutlich. Der Getriebegehäusemantel kann beispielsweise röhrenförmig sein und muß keine quaderförmige Gestalt aufweisen. Dies bietet aufgrund eines geringeren Materialverbrauchs Platz-, Gewichts- und Kostenvorteile. Außerdem können die Gehäusedeckel Lagerungen für die Antriebs- und die Abtriebswelle aufweisen, wodurch eine Fertigung des Planetengetriebes vereinfacht wird.

Ferner kann antriebsseitig ein Kegelrad-, Stirnrad-, Kegelstirnradgetriebe oder Getriebemotor zur Bildung einer Getriebe- oder Getriebemotorkombination montiert sein. Entsprechend einer weiteren Ausgestaltung kann der Getriebegehäusemantel eine Anzahl n Planetenstufen umgeben, und im Innenraum des Getriebegehäuses kann eine Anzahl n-1 Trennwände angeordnet sein. Damit ist eine Anwendung der vorliegenden Erfindung nicht auf zweistufige Planetengetriebe beschränkt.

Die Erfindung wird nachfolgend an einem Ausführungsbeispiel anhand der Zeichnung näher erläutert. Es zeigt
- Figur 1: eine schematische Darstellung eines erfindungsgemäßen Planetengetriebes,
- Figur 2: eine Schnittdarstellung des erfindungsgemäßen Planetengetriebes gemäß Figur 1,
- Figur 3: eine perspektivische Darstellung des erfindungsgemäßen Planetengetriebes gemäß Figur 1.

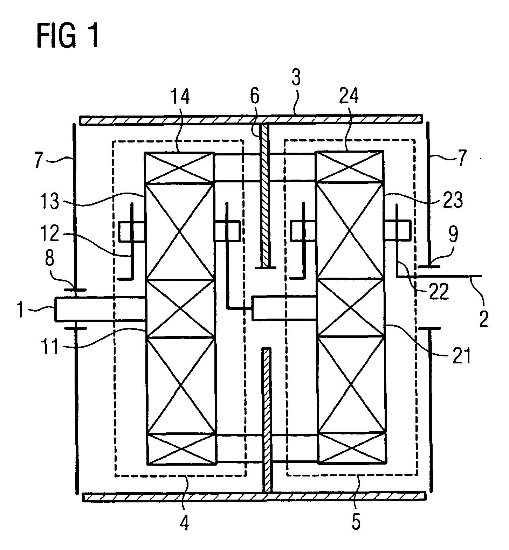

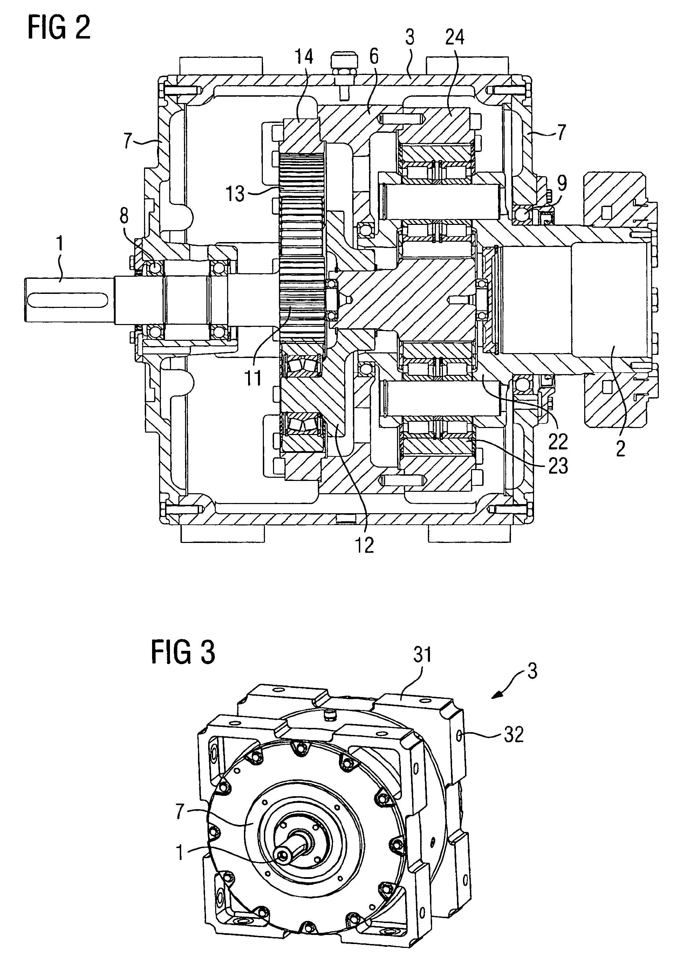

Das in Figur 1 dargestellte Planetengetriebe umfaßt eine Antriebs- 1 und eine Abtriebswelle 2, die in einem Getriebegehäuse gelagert sind. In Figur 2 ist dies in einer Schnittdarstellung veranschaulicht. Die Antriebswelle 1 ist mit einem Sonnenrad 11 einer ersten Planetenstufe 4 verbunden, während die Abtriebswelle 2 mit einem mehrere Planetenräder 23 umfassen Planetenträger 22 einer zweiten Planetenstufe 5 verbunden ist. Die erste Planetenstufe 4 umfaßt außerdem einen Planetenträger 12, der mehrere mit einem feststehenden Hohlrad 14 kämmende Planetenräder 13 aufnimmt und mit einem Sonnenrad 21 der zweiten Planetenstufe 5 verbunden ist. Die zweite Planetenstufe 5 weist ebenfalls ein feststehendes Hohlrad 24 auf, das mit den Planetenrädern 23 der zweiten Planetenstufe 5 kämmt.

Das Getriebegehäuse umfaßt einen einstückigen Getriebegehäusemantel 3, der die erste 4 und zweite Planetenstufe 5 umgibt und stirnseitig jeweils durch einen Gehäusedeckel 7 verschlossen ist. Die Gehäusedeckel 7 weisen darüber hinaus Lagerungen 8, 9 für die Antriebs- 1 und die Abtriebswelle 2 auf.

Im Innenraum des Getriebegehäuses ist eine Trennwand 6 angeordnet, durch die der Innenraum in zwei Teilräume unterteilt ist, in denen jeweils eine Planetenstufe 4, 5 angeordnet ist. Die Trennwand 6 weist eine Öffnung auf, durch die eine den Planetenträger 12 der ersten Planetenstufe 4 und das Sonnenrad 21 der zweiten Planetenstufe 5 verbindende Welle geführt ist. An der Trennwand 6 sind außerdem die Hohlräder 14, 24 der Planetenstufen 4, 5 befestigt, wobei jeweils eine Stirnseite eines Hohlrades 14, 24 an der Trennwand 6 anliegt.

Entsprechend der perspektivischen Darstellung gemäß Figur 3 ist der Getriebegehäusemantel 3 röhrenförmig und an stirnseitigen Enden von umlaufenden Anschraubleisten 31 umgeben, so daß das Getriebegehäuse einen quaderförmigen Raum umspannt. An Ecken des Getriebegehäuses sind Befestigungspunkte für Befestigungsmittel vorgesehen. Im vorliegenden Ausführungsbeispiel weisen den Anschraubleisten 31 hierzu Bohrungen 32 auf.

Das in Figur 3 dargestellte Planetengetriebe ist einfach aufzustellen, insbesondere ohne zusätzliche Anbau- und Stützelemente. Außerdem kann das Planetengetriebe sowohl in Fußaufstellung als auch in Aufsteckausführung aufgestellt werden. Vorteilhafterweise ist das Getriebegehäuse so dimensioniert, daß es Reaktions- bzw. Gehäusemomente zuverlässig überträgt.

Die Anwendung der vorliegenden Erfindung ist nicht auf das beschriebene Ausführungsbeispiel beschränkt.

## Patentansprüche

1. Planetengetriebe mit
- einer Antriebs- (1) und einer Abtriebswelle (2), die in einem Getriebegehäuse gelagert sind,
- zumindest einer ersten (4) und zweiten Planetenstufe (5),
- einem einstückigen Getriebegehäusemantel (3), der die erste (4) und zweite Planetenstufe (5) umgibt und stirnseitig jeweils durch einen Gehäusedeckel (7) verschlossen ist,
- zumindest einer im Innenraum des Getriebegehäuses angeordneten Trennwand (6), durch die der Innenraum in zumindest zwei Teilräume unterteilt ist, wobei jeder Teilraum jeweils eine Planetenstufe (4, 5) aufnimmt,
- einer die Planetenstufen (4, 5) miteinander verbindenden Welle, die durch eine Öffnung in der Trennwand (6) geführt ist,
**dadurch gekennzeichnet, daß**
- Hohlräder (14, 24) der Planetenstufen (4, 5) stirnseitig an der Trennwand (6) befestigt sind
- für die Hohlräder (14, 24) ein anderer Werkstoff als für den Getriebegehäusemantel (3) oder die Trennwand (6) ausgewählt ist.

2. Planetengetriebe nach Anspruch 1,
bei dem das Getriebegehäuse einen quaderförmigen Raum umspannt, wobei an Ecken des Getriebegehäuses Befestigungspunkte für Befestigungsmittel vorgesehen sind.

3. Planetengetriebe nach Anspruch 2,
bei dem an stirnseitigen Enden des Getriebegehäusemantels umlaufende Anschraubleisten vorgesehen sind.

4. Planetengetriebe nach einem der Ansprüche 1 bis 3,
bei dem der Getriebegehäusemantel röhrenförmig ist.

5. Planetengetriebe nach einem der Ansprüche 1 bis 4,
bei dem die Gehäusedeckel Lagerungen für die Antriebs- und die Abtriebswelle aufweisen.

6. Planetengetriebe nach einem der Ansprüche 1 bis 5,
bei dem antriebsseitig ein Kegelrad-, Stirnrad-, Kegelstirnradgetriebe oder Getriebemotor zur Bildung einer Getriebe-oder Getriebemotorkombination montiert ist.

7. Planetengetriebe nach einem der Ansprüche 1 bis 6,
bei dem der Getriebegehäusemantel eine Anzahl n Planetenstufen umgibt, und bei dem im Innenraum des Getriebegehäuses eine Anzahl n-1 Trennwände angeordnet ist.

8. Planetengetriebe nach einem der Ansprüche 1 bis 7,
bei dem die Antriebswelle mit einem Sonnenrad der ersten Planetenstufe verbunden ist, und bei dem die Abtriebswelle mit einem Planetenträger der zweiten Planetenstufe verbunden ist.

## Claims

1. Planetary gear set, comprising
- a drive shaft (1) and a driven shaft (2) which are mounted in a gear set housing,
- at least one first (4) and second planetary stage (5),
- a one-piece gear set housing casing (3) which surrounds the first (4) and second planetary stages (5) and is closed at each end face by a housing cover (7),
- at least one separating wall (6) is arranged in the interior of the gear set housing, said separating wall dividing the interior into at least two partial chambers, wherein each partial chamber accommodates a planetary stage (4, 5),
- a shaft connecting the planetary stages (4, 5) to one another, which shaft is guided through an opening in the separating wall (6),
**characterized in that**
- ring gears (14, 24) of the planetary stages (4, 5) are fastened at the end face to the separating wall (6),
- a different material is selected for the ring gears (14, 24) than for the gear set housing casing (3) or the separating wall (6).

2. Planetary gear set according to Claim 1, in which the gear set housing encompasses a cuboidal space, wherein fastening points for fastening means are provided at corners of the gear set housing.

3. Planetary gear set according to Claim 2, wherein screw-on strips encircling end-face ends of the gear set housing casing are provided.

4. Planetary gear set according to one of Claims 1 to 3, in which the gear set housing casing is tubular.

5. Planetary gear set according to one of Claims 1 to 4, in which the housing covers have mountings for the drive shaft and the driven shaft.

6. Planetary gear set according to one of Claims 1 to 5, wherein a bevel gearing, spur gearing, combined bevel and spur gearing or geared motor is mounted on the drive side in order to form a gear set or geared motor combination.

7. Planetary gear set according to one of Claims 1 to 6, in which the gear set housing casing surrounds a number n of planetary stages, and in which a number n-1 of separating walls are arranged in the interior of the gear set housing.

8. Planetary gear set according to one of Claims 1 to 7, in which the drive shaft is connected to a sun wheel of the first planetary stage, and in which the driven shaft is connected to a planet carrier of the second planetary stage.

## Revendications

1. Train épicycloïdal comprenant
- un arbre ( 1 ) menant et un arbre ( 2 ) mené, qui sont montés dans un carter d'engrenage,
- au moins un premier ( 4 ) et un deuxième étages ( 5 ) satellites,
- une enveloppe ( 3 ) d'une seule pièce de carter d'engrenage, qui entoure le premier ( 4 ) et le deuxième étages ( 5 ) satellites et qui est fermée du côté frontal, respectivement par un couvercle ( 7 ) de carter,
- au moins une cloison ( 6 ), qui est montée à l'intérieur du carter d'engrenage et par laquelle l'intérieur est subdivisé en au moins deux chambres partielles, chaque chambre partielle recevant respectivement un étage ( 4, 5 ) satellite,
- un arbre, qui relie entre eux les étages ( 4, 5 ) satellites et qui passe dans une ouverture de la cloison ( 6 ),
**caractérisé en ce que**
- des roues ( 14, 24 ) à denture intérieure des étages ( 4, 5 ) satellites sont fixées du côté frontal à la cloison ( 6 ),
- il est choisi pour les roues ( 14, 24 ) à denture intérieure un matériau autre que pour l'enveloppe ( 3 ) du carter d'engrenage ou pour la cloison ( 6 ).

2. Train épicycloïdal suivant la revendication 1,
dans lequel le carter d'engrenage délimite un espace parallélépipédique, des points de fixation de moyens de fixation étant prévus aux coins du carter d'engrenage.

3. Train épicycloïdal suivant la revendication 2,
dans lequel il est prévu des baguettes de vissage courant sur les extrémités du côté frontal de l'enveloppe du carter d'engrenage.

4. Train épicycloïdal suivant l'une des revendications 1 à 3, dans lequel l'enveloppe du carter d'engrenage est tubulaire.

5. Train épicycloïdal suivant l'une des revendications 1 à 4, dans lequel le couvercle du carter comprend des paliers pour l'arbre menant et pour l'arbre mené.

6. Train épicycloïdal suivant l'une des revendications 1 à 5, dans lequel il est monté du côté menant un engrenage à roue conique, un engrenage à roue droite, un engrenage conique et droit ou un motoréducteur, pour la formation d'une combinaison de train d'engrenage ou d'une combinaison de motoréducteur.

7. Train épicycloïdal suivant l'une des revendications 1 à 6, dans lequel l'enveloppe du carter d'engrenage entoure un nombre n d'étages satellites et dans lequel un nombre de n-1 cloisons est disposé à l'intérieur du carter d'engrenage.

8. Train épicycloïdal suivant l'une des revendications 1 à 7, dans lequel l'arbre menant est relié à une roue solaire du premier étage satellite et dans lequel l'arbre mené est relié à une cage de transmission du deuxième étage satellite.
